# DEMANDE DE BREVET EUROPEEN

(11) **EP 1 512 615 A1**
(43) Date de publication de la demande: **09.03.2005**
(21) Numéro de dépôt: 04292161.9
(22) Date de dépôt: 08.09.2004
(51) Int. Cl.: B62D 25/18, B62D 29/04

(54) **Pièce opaque de carrosserie comportant un film électroluminescent surmoulé, aile, élargisseur d'aile, hayon, pare-chocs, bas de caisse, panneau extérieur de portière et seuil de coffre de véhicule automobile**

(30) Priorité: 08.09.2003 FR 0310568
(71) Demandeur: COMPAGNIE PLASTIC OMNIUM, 69007 Lyon (FR)
(72) Inventeur: Pommeret, Maelig, 69003 Lyon (FR)
(74) Mandataire: Remy, Vincent Noel Paul

(57) **Abrégé**

La présente invention concerne une pièce opaque (12) de carrosserie pour véhicule automobile, comportant un film électroluminescent (14).

Le film électroluminescent (14) est surmoulé.

De façon optionnelle, on rapporte sur la pièce une protection (16) en matière plastique laissant passer la lumière.

L'invention concerne également une aile, un élargisseur d'aile, un pare-chocs, un hayon, un bas de caisse, un panneau extérieur de portière et un seuil de coffre pour véhicule automobile.

## Description

La présente invention concerne une pièce de carrosserie comportant un film électroluminescent, une aile, un élargisseur d'aile, un pare-chocs, un hayon, un bas de caisse, un panneau extérieur de portière et un seuil de coffre pour véhicule automobile.

On sait que l'utilisation de films électroluminescents, visibles depuis l'extérieur d'un véhicule automobile, permet d'obtenir des dispositifs de signalisation, émettant de la lumière, sans nécessiter de dispositifs de protection spécifiques ni d'ampoules électriques à changer. On sait également que ces films électroluminescents sont particulièrement esthétiques, offrant une lumière continue, et, grâce à leur impression sur un support, permettent de réaliser facilement des formes complexes.

On connaît déjà dans l'état de la technique, notamment dans EP 1316495, des pièces de carrosserie sur lesquelles on rapporte, par encliquetage, une pièce de protection en matériau translucide recouverte, sur sa face intérieure, d'un film électroluminescent.

Le problème consiste en ce que, lorsque la pièce de protection est rayée ou cassée, il est nécessaire de changer non seulement la pièce de protection, mais également le film électroluminescent la recouvrant, ce qui augmente le coût de réparation.

L'invention a pour but de remédier à cet inconvénient en fournissant une pièce de carrosserie munie d'un film électroluminescent qui ne nécessite pas d'être changé lorsqu'une protection translucide le recouvrant est endommagée.

A cet effet, l'invention a pour objet une pièce opaque de carrosserie pour véhicule automobile, comportant un film électroluminescent, caractérisée en ce que le film électroluminescent est solidarisé à la pièce de carrosserie par collage ou par adhérence.

Selon un mode de réalisation de cette pièce de carrosserie, le film est surmoulé.

En pratique, on peut rapporter sur la pièce de carrosserie une protection en matière plastique laissant passer la lumière. Elle est destinée à protéger le film d'attaques extérieures dues au climat ou à des chocs légers.

Eventuellement, cette protection est amovible. Ainsi, on peut la changer indépendamment du film électroluminescent.

De façon optionnelle, la protection est un bandeau.

L'invention a également pour objet une aile pour véhicule automobile. Eventuellement, cette aile comporte un rebord autour du passage de roue, auquel est solidarisé le film électroluminescent et la protection recouvre ledit rebord.

L'invention a également pour objet un élargisseur d'aile, un pare-chocs, un hayon, un bas de caisse, un panneau extérieur de portière et un seuil de coffre de véhicule automobile.

L'invention sera mieux comprise à la lecture de la description qui va suivre, donnée uniquement à titre d'exemple et faite en se référant aux dessins annexés dans lesquels :
- la figure 1 est un schéma éclaté d'une aile selon l'invention ; et
- la figure 2 est un schéma éclaté d'une aile selon un second mode de réalisation de l'invention.

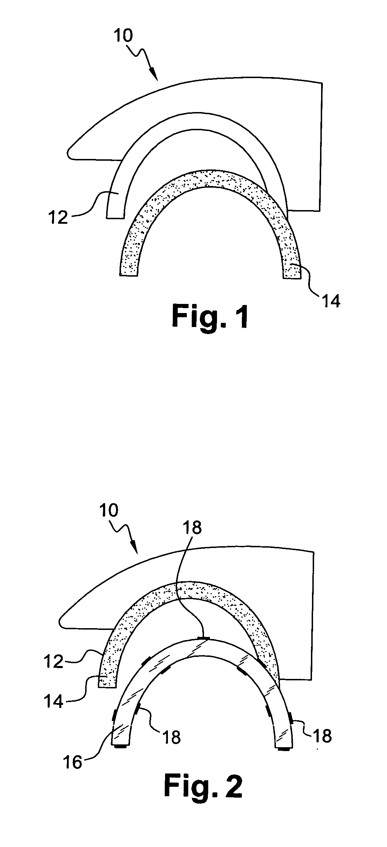

On a représenté sur la figure 1 une aile avant 10 de véhicule automobile, en polypropylène et opaque, comportant un rebord 12 de passage de roues, orienté vers l'extérieur du véhicule automobile. Un film électroluminescent 14 recouvre ce rebord 12.

Le film électroluminescent 14 est un film multicouche, alimenté électriquement de façon à émettre de la lumière. Il comporte notamment une couche de phosphore, une électrode conductrice, et une couche support en polyester ou en polycarbonate. Comme il est obtenu par impression, il est facile de faire des formes complexes tels que des logos ou des motifs sur le film.

Le film électroluminescent 14 est solidarisé au rebord 12 par collage, c'est-à-dire qu'il est fixé au rebord grâce à une couche intermédiaire de colle. On entend également par collage, l'utilisation d'un film adhésif intermédiaire.

Selon un autre mode de réalisation, le film électroluminescent est fixé à l'aile par adhérence. On entend par adhérence, toute fixation ne nécessitant pas d'intermédiaire entre le film et l'aile, tel que le surmoulage ou la soudure par vibrations.

Comme on le voit sur la figure 2, une fois le film électroluminescent 14 solidarisé au rebord 12, on peut rapporter une protection 16 transparente sur le rebord 12.

Selon un autre mode de réalisation, en vue d'un effet de style différent, la protection 16 est translucide.

La protection 16 est fixée sur le rebord 12 grâce à des fixations 18, telles que des clips. Grâce à ces fixations 18, cette protection 16 est amovible, de façon à ce qu'elle puisse être changée, en cas d'endommagement, indépendamment du film électroluminescent 14.

Selon d'autres modes de réalisation, le film électroluminescent peut être solidarisé à un pare-chocs, à un hayon ou à un bas de caisse, sous la forme d'un bandeau, sur lequel on rapporte, éventuellement, une protection transparente.

Parmi les avantages de l'invention, on notera que celle-ci permet d'obtenir tout type de pièce de carrosserie munie d'un dispositif de signalisation ou de décoration, à la fois facile à réaliser et esthétique. On peut notamment solidariser ce film sur des endroits peu usuels, tels que sur un élargisseur d'aile.

On notera enfin que l'invention n'est pas limitée aux modes de réalisation précédemment décrits.

## Revendications

1. Pièce opaque (12) de carrosserie pour véhicule automobile, comportant un film électroluminescent (14), **caractérisée en ce que** le film électroluminescent (14) est solidarisé à la pièce de carrosserie (12) par surmoulage.

2. Pièce de carrosserie (12) selon la revendication 1, sur laquelle on rapporte une protection (16) en matière plastique laissant passer la lumière.

3. Pièce de carrosserie (12) selon la revendication 2, dans laquelle la protection est amovible.

4. Pièce de carrosserie selon l'une quelconque des revendications 2 et 3, dans laquelle la protection est un bandeau.

5. Aile selon l'une quelconque des revendications 1 à 4.

6. Aile (10) selon la revendication 2 ou 3, comportant un rebord (12) autour du passage de roue, auquel est solidarisé le film électroluminescent (14) et dans laquelle la protection (16) recouvre ledit rebord (12).

7. Elargisseur d'aile selon l'une quelconque des revendications 1 à 4.

8. Pare-chocs selon l'une quelconque des revendications 1 à 4.

9. Hayon selon l'une quelconque des revendications 1 à 4.

10. Bas de caisse selon l'une quelconque des revendications 1 à 4.

11. Panneau extérieur de portière selon l'une quelconque des revendications 1 à 4.

12. Seuil de coffre selon l'une quelconque des revendications 1 à 4.
